# EUROPEAN PATENT SPECIFICATION

(11) **EP 2 781 343 B1**
(45) Date of publication and mention of the grant of the patent: **15.06.2016**
(21) Application number: 13382104.1
(22) Date of filing: 22.03.2013
(51) Int. Cl.: B29C 70/44, B29C 70/54, B29C 70/08

(54) **Reinforcement system for acrylic sanitary products and acrylic sanitary product thus obtained**
Verstärkungssystem für Acryl-Sanitärprodukte und damit hergestelltes Acryl-Sanitärprodukt
Système de renforcement pour des produits sanitaires acryliques et produit sanitaire acrylique ainsi obtenu

(43) Date of publication of application: 24.09.2014
(73) Proprietor: Roca Sanitario, S. A., 08029 Barcelona (ES)
(72) Inventor: Quintana Bartual, Alberto, 08029 BARCELONA (ES)
(74) Representative: Oficina Ponti, SLP

(56) References cited:
- US-A- 4 132 755
- US-A1- 2003 077 965
- US-A1- 2006 080 769

## Description

### FIELD OF THE INVENTION

The present invention relates to a reinforcement method for acrylic sanitary ware products thermoformed by a vacuum-assisted process. The present invention also relates to the thermoformed acrylic sanitary ware product thus reinforced.

### BACKGROUND OF THE INVENTION

Several reinforcement systems for thermoplastic or thermoforming materials are well known in the art.

Thermoforming is a manufacturing process of thermoplastic sheets or films. Specifically, the thermoplastic sheet or film takes the shape of the mold after the application of temperature to obtain the thermoformed piece. The sheet or film is heated to the softening temperature, then it is shaped on a mold and finally it is cooled. A thermoforming machine may only work under vacuum or under vacuum in combination with pressurized air in the forming process.

The most widely used reinforcement systems for thermoforming plastic materials are, on one hand, the reinforcement by applying an unsaturated polyester resin (UPR) layer with curing agents together with glass fibres and, on the other hand, reinforcement by applying a polyurethane foam layer.

Polyester resins as reinforcing products in thermoplastic pieces are resins with relatively reduced costs which have additionally good mechanical properties. However, said resins have two important drawbacks. During the application process of polyester resins and the subsequent curing volatile organic compounds (VOCs) are emitted, vapour emissions being undesirable. The effect that these vapours have on health has not yet been clarified, but it has been demonstrated that they cause nausea and eye irritation. There are also studies suggesting that they may be carcinogenic products, although this is an aspect which has not been clinically proven to date. In addition, due to the discomfort caused by these vapours, their emission is being gradually limited by environmental legislation in all industrialized countries. It is therefore necessary to install vapour treatments systems, such as styrene vapours among others, before these gases are emitted to the atmosphere.

Both unsaturated polyester resins (UPR) and curing agents used for accelerating the curing process are highly combustible products. It is well known that said curing agents are mostly organic peroxides and, therefore, products which are especially dangerous due to their high inflammability and ease of explosion. These circumstances force the operators to maximize the safety measures while handling these products and to provide expensive detection and fire extinguishing equipment with the resulting maintenance costs required.

Furthermore, due to design of acrylic sanitary ware products there is no industrially applicable procedure that allows obtaining a reinforcement with fibre glass and polyester resins without the intervention of operators that apply the resin manually and in localized manner directly on those parts with graduations or sudden changes in level in a sanitary ware product in order to ensure the suitable application of the resin together with the glass fibres.

Another type of reinforcement is using polyurethane foams. Nevertheless, polyurethane foams degrade due to exposure to ultraviolet rays, which does not guarantee the durability of the sanitary ware product thus reinforced during the storage period before its placement. Furthermore, when these foams burn they produce toxic gases which contain chemical substances hazardous for the environment. Polyurethane foams have a cost considerably higher than that of unsaturated polyester resins (UPR), a motive for which the manufacturers do not usually use this means of reinforcement.

Still another type of reinforcement is disclosed in US4132755, which describes a process for manufacturing resin-impregnated, reinforced articles without the presence of resin fumes. A "bag within a bag" technique is used. More particularly, a perforated sheet is placed over the laminate, with the marginal areas of this sheet sealed to a single cavity mold or to the structure to be reinforced, to define an inner chamber; over this sheet of perforated material a sheet of impervious flexible material is placed, with the marginal areas of this impervious sheet sealed to the mold so as to define an outer chamber; the inner chamber is connected to a vacuum source so as to draw the impervious sheet, along with the perforated sheet against the laminate and mold surface. The outer chamber is then connected to the resin source. With this technique the resin, instead of flowing longitudinally through the glass fibers and giving a "washing" effect which orients these fibers, is evenly distributed through the many pin hole-like apertures in the perforated sheet, In this manner each drop of resin reaches every corner of the laminate without flowing lengthwise through the glass reinforcement.

Acrylic sheets of appropriate thickness and colour that form the outer surface of the bathtub, shower stall, wash basin can be draped with a flexible matrix material whereupon the double vacuum bag may be applied and the resin may be introduced to the areas requiring reinforcing. However, with this technique a perforated sheet which matches the areas requiring reinforcing is required, being this technique not suitable for different articles having distinct areas requiring reinforcing.

US2006/0080769 discloses the features of the preamble of claim 1.

In another field of the technique, the field of water sports, surfboards are reinforced with resins using a traditional technique. Surfboards are flat structures in order to not offer resistance to the water and do not have concave or convex parts or pronounced recesses and projections in their design. The field of water sports is a field remote from sanitary ware products not only due to the characteristics of the seawater that comes into contact with the surfaces to be reinforced, no water coming into contact with the face of the thermoformed sanitary ware product to be reinforced, but also because in water sports the most aerodynamic structure possible is sought which offers the minimum resistance to sea water so that the structures are as flat as possible with few graduations or sudden changes in level in their design, i.e. they are designs that try to avoid at all costs concave and convex parts or parts with pronounced recesses and projections. On the other hand, the substrate to be reinforced in the field of water sports has special characteristics due to its end use. In water sports, the substrate to be reinforced is a gel-coat layer, an ABS substrate or polystyrene.

Although a vacuum-assisted resin reinforcement process is known in the field of water sports, the technique used on surf boards does not resolve the problem of the distribution of the resin towards the concave and convex parts or parts with pronounced recesses and projections, parts that are typically found in thermoformed acrylic sanitary ware products such as, for example, the support flaps of a bath or a shower base, or the projections and recesses in the inner face of a hydromassage bath, etc.

In light of drawbacks found in the reinforcement systems for plastic materials in the state of the art, the present inventors provide a method based on the infusion of the resin which overcomes said drawbacks additionally providing other advantages which will be apparent from the following description.

### DESCRIPTION OF THE INVENTION

The present invention has the object of resolving the aforementioned drawbacks, also providing other advantages that will be described below.

The sanitary ware product base to be reinforced in accordance with the present invention is obtained from thermoforming a sheet of polymethylmethacrylate (PMMA) and is, therefore, a thermoformed PMMA acrylic sanitary ware product.

The reinforcement method for the thermoformed acrylic sanitary ware products in accordance with the present invention is based on the infusion of a resin with fillers, additives, curing agent and the absence of thixotropic compounds by the action of a vacuum, gravity and/or injection through a set of fibre glass layers that cover the thermoformed acrylic sanitary ware product by the face to be reinforced. The vacuum is formed between the face of the thermoformed acrylic sanitary ware product to be reinforced and a bag of elastic material susceptible of being coupled to the set of fibre glass layers that cover the thermoformed acrylic sanitary ware product by the face to be reinforced.

In particular, the reinforcement method in accordance with the invention comprises a thermoformed PMMA acrylic sanitary ware product with concave and convex parts, fibre glass, resin and curing agent, which method comprises the following stages:
a) covering the face to be reinforced of the thermoformed acrylic sanitary ware product with a set of fibre glass layers, adapting the layers to the form of the face to be reinforced;
b) placing on top a bag of elastic material so that both the face to be reinforced and the set of fibre glass layers that cover it can be isolated from the atmosphere by said bag, said bag being provided with means connected to a vacuum apparatus, means connected to the atmosphere and means connected to a supply comprising the resin and the curing agent;
c) applying a vacuum between the bag of elastic material and the face of the sanitary ware product to be reinforced so that the set of fibre glass layers adapts to the form of the face of the sanitary ware product to be reinforced;
d) opening the means connected to the supply comprising the resin and curing agent, maintaining the vacuum until, by action of the vacuum, gravity and/or injection, the infusion of the resin and curing agent takes place distributing them uniformly through the set of fibre glass layers that cover the face of the sanitary ware product to be reinforced;
e) allowing the curing agent to act for the necessary time and, then, removing the bag of elastic material to obtain the thermoformed and reinforced acrylic sanitary ware product; which is characterized in that the resin is polyester resin or epoxy resin with fillers and additives, in addition to the curing agent, and is free from thixotropic compounds, and in that where the set of fibre glass layers comprises at least three layers in the form of sandwich with the following composition and function:

- the first layer or lower layer which is in contact with the face to be reinforced is of woven mat-type fibre glass and has the function of retaining the resin;
- the second layer or intermediate layer is of woven mat-type fibre glass fabric or polypropylene, polyethylene or PVC fabric and has the function of distributing the resin to impregnate the layers in contact with it; and
- the third layer or outer layer is of fibre glass with biaxial or multiaxial crossed-type mesh fabric and has the function of providing rigidity and resistance to the thermoformed acrylic sanitary ware product.

Advantageously, with the reinforcement method according to the invention it achieves, by effect of the vacuum, the action of gravity and/or by injection applied, for example, plunger, and by a certain combination of the layers of fibre glass, that the resin, fillers, additives and curing agent flow at a rate and direction controlled throughout the set of fibre glass layers that cover the face of the thermoformed acrylic sanitary ware product to be reinforced, obtaining a uniform reinforcement, and in particular, an adequate reinforcement in the concave and convex parts typically present in thermoformed acrylic sanitary ware products.

Preferably, the resin includes inorganic fillers selected from calcium carbonate, talc, alumina or marble sand. A mixture is prepared comprising the resin, the fillers, the curing agent and additives such as colouring agents, accelerators and solvents. This mixture is distributed throughout the set of fibre glass layers during the infusion stage due to the effect of the vacuum, by the action of the gravity and/or by forced injection, for example, with a plunger coupled to the supply containing said mixture of resin, fillers, additives and curing agent.

One of the problems to be resolved by the inventors has been to select a combination of fibre glass layers suitable to guarantee the fluidity and distribution of the resin that includes the fillers in the concave and convex parts or with pronounced recesses and projections so that it, on the one hand, can uniformly soak the entire set of fibre glass layers and, on the other hand, the curing starts once the distribution of the resin has concluded throughout the set of layers that cover the face of the thermoformed PMMA acrylic sanitary ware product to be reinforced. The face of the thermoformed acrylic sanitary ware product to be reinforced is the non-visible face of a thermoformed acrylic sanitary ware product.

In the present invention "curing agent", also called "hardener" is understood as a chemical substance that reacts with the polyester resin or the epoxy resin and causes the polymerization or cross-linking of the resin with temperature. Examples of curing agents or hardeners are methyl ethyl ketone peroxide (MEKP) or benzoyl. The working conditions are a temperature between 18 and 45°C and atmospheric pressure.

The fibre glass is selected from a biaxial or multiaxial woven mat-type fibre glass *(non crimp fabric, NCF*).

The mat may be of cross-linked fibres or cut fibres, agglomerated and pressed, forming a blanket which has a high power of absorption of the polyester resins. There are different thicknesses or grammages that range from 30 g/m² to 600 g/m². The absorption capacity of the resin ranges from approximately two to three times its weight. The thickness of the sheet varies with the grammage and the number of layers, but as reference, 1 mm thick for each 450g/m² of mat.

The biaxial fibre glass has fibres oriented in two directions, layer by layer, sewn together to form a fabric and the multiaxial fibre glass has several layers of fibres oriented in different directions which are sewn together to form a single fabric.

The set of layers to be used in the invention comprises at least three layers in the form of sandwich, where the first layer or lower layer and the third layer or upper layer have a density between 200 and 600 g/m², and the second layer or intermediate layer which acts as a net has a density between 15 and 90 g/m², and so on and so forth until as many layers as resistance desired in the thermoformed acrylic sanitary ware product.

The weight ratio between each layer and the mixture containing the resin is also an important factor in achieving a suitable wetting of each layer or a suitable infusion. Advantageously, the weight ratio between each layer and the mixture containing the resin is between 2 and 3.5 with respect to the total weight of the mixture of resin, curing agent, fillers and additives.

Still more preferably, the first layer or lower layer which is in contact with the face to be reinforced is in a weight ratio between 3 and 3.5 with respect to the total weight of the mixture of resin, curing agent, fillers and additives, and the third layer or upper layer is in a weight ratio between 2 and 2.5 with respect to the total weight of the mixture of resin, curing agent, fillers and additives.

Preferably, the resin comprises inorganic fillers in a concentration between 20 and 60 weight % with respect to the total weight of the mixture of resin, curing agent, fillers and additives. Preferably, the fillers are of calcium carbonate. The fillers play an important role from the financial standpoint because they reduce the quantity of polyester resin or epoxy resin to be used in the percentage that are present and, therefore, the total costs of the reinforcement method. The cost of the resin is 20 times greater than that of the fillers.

Advantageously, in accordance with the first aspect of the invention a set of layers is provided by way of a sandwich with a combination of layers so that the mixture containing the resin can flow and be distributed throughout the set of layers and be impregnated in them without difficulty, thus obtaining a reinforcement throughout the face of the thermoformed acrylic sanitary ware product to be reinforced.

Preferably, the bag of elastic material is latex-based, polyamide or any other thermopolymer elastomer with EPDM (ethylene-propylene-diene monomer rubber), materials which have good resistance to abrasion and wear, good resistance to atmospheric agents, acids and alkalis and chemical products in general. It is essential that the bag of elastic material does not degrade in the presence of styrene and solvents such as acetone. Although silicone can be used, it has low resistance to styrene and its useful life is reduced compared with a latex-based bag. A latex-based bag is therefore preferable.

Advantageously, with the present invention it is possible to appropriately control and treat the volatile organic compounds (VOCs) given off during the application process of the polyester or epoxy resin, which may also contain styrene, although in a smaller concentration, and its later curing through the means connected to the atmosphere with, for example, a tube or pipe that collects the vapours in a container adapted for said purpose and treat them.

Advantageously, with the reinforcement method in accordance with the invention it provides a method which also enables collecting the vapours generated by the polyester resin or epoxy resin without them coming into contact with the atmosphere at any time during handling of the polyester or epoxy resin.

Preferably, the means connected to a vacuum apparatus, the means connected to the atmosphere and the means connected to a supply of resin and curing agent are an orifice with a tube or pipe connected to a vacuum apparatus, connected to the atmosphere and connected to the supply of resin and curing agent, respectively.

The supply of resin and curing agent may comprise injection means, such as, for example, a plunger which increases the rate of supply of the mixture containing the resin, fillers, additives and curing agent to the set of fibre glass layers.

Advantageously, the reinforcement method according to the invention comprises sealing means around the perimeter of the thermoformed acrylic sanitary ware product to be reinforced and around the perimeter of the bag of elastic material so that the set of fibre glass layers disposed on the face of the acrylic sanitary ware product to be reinforced is isolated from the atmosphere with said sealing or closing means throughout its perimeter.

In an embodiment, said sealing means are a metal frame around the perimeter of the thermoformed acrylic sanitary ware product to be reinforced with clips which can seal around the perimeter of the bag of elastic material.

In accordance with the invention, the thermoformed PMMA acrylic sanitary ware product to be reinforced is a thermoformed acrylic sanitary ware product with concave and convex parts selected from a bath, shower base, shower panel, hydromassage column or a shower or bath cabin.

In another aspect, the invention also relates to the thermoformed PMMA acrylic sanitary ware product with concave and convex parts which has been reinforced with the method according to the first aspect of the invention.

Below, a preferred embodiment of the invention is included which, without being limiting, describes an example of reinforcement of a thermoformed PMMA acrylic sanitary ware product in accordance with the invention.

### EXAMPLE

### Materials

- Thermoformed PMMA bath (polymethylmethacrylate)
- Resin: Polyester resin
- Fillers: CaCO₃
- Curing agent: methyl ethyl ketone peroxide (MEKP)
- Solvent: alpha-methylstyrene
- Colouring agent
- Bag: Latex-based bag

### Method

A mixture was prepared of 6,500g of polyester resin, 2,200g of CaCO₃, 200g of methyl ethyl ketone peroxide (MEKP), 200g of alpha-methylstyrene and 200g of colouring agent.

The sandwich of fibre glass layers was prepared. A first layer of mat with cut fibres with density of 450g/m², an intermediate network of polypropylene (PP) with density of 25g/m², and a last layer also of woven fibre mat with density of 450g/m² was used with a total weight of the sandwich of 3.5 kg.

Then, the face to be reinforced of the thermoformed PMMA bath was covered with the sandwich of layers, one by one, adapting each layer to the form of the non-visible face of the bath. Next, it was covered with a latex-based bag so that both the face to be reinforced and the set of fibre glass layers were isolated from the atmosphere by said bag. A vacuum between 0.87 and 0.90 bars was applied so that the sandwich of layers was adapted to the form of the face of the bath to be reinforced. The process was performed at an ambient temperature of 19°C. Next, the pipe that goes from the bag to the supply of the prepared mixture of polyester resin, CaCO₃, methyl ethyl ketone peroxide, alpha-methylstyrene and colouring agent was opened, and maintaining the vacuum and by action of gravity, the infusion took place of the mixture uniformly through the set of fibre glass layers that cover the face of the bath to be reinforced. The curing agent was allowed to act for approximately 75 min and, finally the latex bag was removed to obtain the reinforced PMMA bath.

Although a particular embodiment of the present invention has been disclosed and represented, it is evident that a person skilled in the art could introduce variants and modifications or replace the details with other technically equivalent ones without departing from the scope of protection defined by the attached claims.

## Claims

1. Reinforcement method for acrylic sanitary ware products comprising a thermoformed PMMA acrylic sanitary ware product with concave and convex parts, fibre glass, resin and curing agent, which method comprises the following stages:
a) covering the face to be reinforced of the thermoformed acrylic sanitary ware product with a set of fibre glass layers, adapting the layers to the form of the face to be reinforced;
b) placing on top a bag of elastic material so that both the face to be reinforced and the set of fibre glass layers that cover it can be isolated from the atmosphere by said bag, said bag being provided with means connected to a vacuum apparatus, means connected to the atmosphere and means connected to a supply comprising the resin and the curing agent;
c) applying a vacuum between the bag of elastic material and the face of the sanitary ware product to be reinforced so that the set of fibre glass layers adapts to the form of the face of the sanitary ware product to be reinforced;
d) opening the means connected to the supply comprising the resin and curing agent, maintaining the vacuum until, by action of the vacuum, gravity and/or injection, the infusion of the resin and curing agent takes place distributing them uniformly through the set of fibre glass layers that cover the face of the sanitary ware product to be reinforced;
e) allowing the curing agent to act for the necessary time and, then, removing the bag of elastic material to obtain the thermoformed and reinforced acrylic sanitary ware product;
wherein
the resin is polyester resin or epoxy resin with fillers and additives, in addition to the curing agent, and is free from thixotropic compounds, and **characterized in that** the set of fibre glass layers comprises at least three layers in the form of sandwich with the following composition and function:
- the first layer or lower layer which is in contact with the face to be reinforced is of woven mat-type fibre glass and has the function of retaining the resin;
- the second layer or intermediate layer is of woven mat-type fibre glass fabric or polypropylene, polyethylene or PVC fabric and has the function of distributing the resin to impregnate the layers in contact with it; and
- the third layer or outer layer is of fibre glass with biaxial or multiaxial crossed-type mesh fabric and has the function of providing rigidity and resistance to the thermoformed acrylic sanitary ware product.

2. Reinforcement method according to claim 1, where the first layer or lower layer and the third layer or upper layer have a density between 200 and 600 g/m².

3. Reinforcement method according to claim 1, where the second layer or intermediate layer has a density between 15 and 90 g/m².

4. Reinforcement method according to any of the preceding claims, where each layer is present in a weight ratio between 2 and 3.5 with respect to the total weight of the mixture of resin, curing agent, fillers and additives.

5. Reinforcement method according to any of the preceding claims, where the first layer or lower layer which is in contact with the face to be reinforced is in a weight ratio between 3 and 3.5 with respect to the total weight of the mixture of resin, curing agent, fillers and additives.

6. Reinforcement method according to any of the preceding claims, where the third layer or upper layer is in a weight ratio between 2 and 2.5 with respect to the total weight of the mixture of resin, curing agent, fillers and additives.

7. Reinforcement method according to claim 1, where the bag of elastic material is latex-based, polyamide or another thermopolymer elastomer with EPDM.

8. Reinforcement method according to claim 7, where the bag of elastic material is latex-based.

9. Reinforcement method according to any of the preceding claims, where the resin comprises inorganic fillers selected from talc, calcium carbonate, alumina and marble sand.

10. Reinforcement method according to claim 9, where the resin comprises calcium carbonate.

11. Reinforcement method according to any of the preceding claims, where the resin comprises fillers in a concentration between 20 and 60 weight % with respect to the total weight of the mixture of resin, curing agent, fillers and additives.

12. Reinforcement method according to claim 1, where the means connected to a vacuum apparatus, the means connected to the atmosphere and the means connected to a supply of resin and curing agent are an orifice in the bag joined to a tube connected to a vacuum apparatus, connected to the atmosphere and connected to the supply of resin and curing agent, respectively.

13. Reinforcement method according to claim 1, comprising sealing means around the perimeter of the thermoformed acrylic sanitary ware product to be reinforced and around the perimeter of the bag of elastic material so that the set of fibre glass layers disposed on the face of the thermoformed acrylic sanitary ware product to be reinforced is isolated from the atmosphere.

14. Reinforcement method according to any of the preceding claims, where the acrylic sanitary ware product to be reinforced is a thermoformed PMMA acrylic sanitary ware product with concave and convex parts selected from a bath, shower base, shower panel, hydromassage column or a shower or bath cabin.

15. Thermoformed PMMA acrylic sanitary ware product with concave and convex parts and reinforced with the method according to any of the preceding claims.

## Patentansprüche

1. Methode zur Verstärkung für acrylische Sanitärausstattungs-Produkte umfassend ein thermogeformtes PMMA acrylisches Sanitärausstattungs-Produkt mit konkaven und konvexen Teilen, Fiberglas Harz und Härter, wobei das Verfahren die folgenden Schritte umfasst:
a) Bedecken der zu verstärkenden Oberfläche des thermogeformten acrylischen Sanitärausstattungs-Produkts mit einem Satz von Fiberglas-Schichten, wobei die Schichten an die Form der zu verstärkenden Oberfläche angepasst werden;
b) Anbringen eines Beutels aus elastischem Material oben, so dass sowohl die zu verstärkende Oberfläche als auch der Satz von Fiberglas-Schichten, welche diese bedecken, von der Atmosphäre durch den Beutel isoliert werden können, wobei der Beutel mit einem Mittel ausgestattet ist, das mit einer Vakuumvorrichtung verbunden ist, mit einem Mittel, das mit der Atmosphäre verbunden ist, und mit einem Mittel, das mit einem Vorrat umfassend das Harz und den Härter verbunden ist;
c) Anlegen eines Vakuums zwischen dem Beutel aus elastischem Material und der zu verstärkenden Oberfläche des Sanitärausstattungs-Produkts, so dass sich der Satz von Fiberglas-Schichten an die Form der zu verstärkenden Oberfläche des Sanitärausstattungs-Produkts anpasst;
d) Öffnen des Mittels, das mit dem Vorrat umfassend das Harz und den Härter verbunden ist, Beibehalten des Vakuums, bis durch das Vakuum, Schwerkraft und/oder Injektion das Eingießen des Harzes und des Härters stattfindet, wobei sie einheitlich durch den Satz von Fiberglas-Schichten, die die zu verstärkende Oberfläche des Sanitärausstattungs-Produkts bedecken, verteilt werden;
e) Zulassen, dass der Härter für die erforderliche Zeit wirkt, und dann Entfernen des Beutels aus elastischem Material, um das thermogeformte und verstärkte acrylische Sanitärausstattungs-Produkt zu erhalten;
wobei das Harz ein Polyesterharz oder ein Epoxidharz mit Füllstoffen und Additiven zusätzlich zum Härter ist und frei von thixotropischen Verbindungen ist, und dadurch charakterisiert ist, dass der Satz an Fiberglas-Schichten zumindest drei Schichten in Sandwichform mit der folgenden Zusammensetzung und Funktion umfasst:
- die erste Schicht oder untere Schicht, welche in Kontakt mit der zu verstärkenden Oberfläche ist, ist aus Fiberglas vom gewebten Mattentyp und hat die Funktion, das Harz zurückzuhalten;
- die zweite Schicht oder Zwischenschicht ist aus Fiberglasstoff vom gewebten Mattentyp oder aus Polypropylen, Polyethylen oder PVC-Stoff und hat die Funktion, das Harz zu verteilen, um die damit in Kontakt befindlichen Lagen zu imprägnieren; und
- die dritte Schicht oder Außenschicht ist aus Fiberglas mit biaxial oder multiaxial gekreuztem Netzstoff und hat die Funktion, dem thermogeformten acrylischen Sanitärausstattungs-Produkt Steifheit und Widerstandsfähigkeit zu verleihen.

2. Methode zur Verstärkung nach Anspruch 1, wobei die erste Schicht oder untere Schicht und die dritte Schicht oder obere Schicht eine Dichte zwischen 200 und 600 g/m² haben.

3. Methode zur Verstärkung nach Anspruch 1, wobei die zweite Schicht oder Zwischenschicht eine Dichte zwischen 15 und 90 g/m² hat.

4. Methode zur Verstärkung nach einem der vorstehenden Ansprüche, wobei jede Schicht in einem Gewichtsverhältnis zwischen 2 und 3,5 mit Bezug auf das Gesamtgewicht der Mischung aus Harz, Härter, Füllstoffen und Additiven vorhanden ist.

5. Methode zur Verstärkung nach einem der vorigen Ansprüche, wobei die erste Schicht oder untere Schicht, welche in Kontakt mit der zu verstärkenden Oberfläche ist, in einem Gewichtsverhältnis zwischen 3 und 3,5 mit Bezug auf das Gesamtgewicht der Mischung aus Harz, Härter, Füllstoffen und Additiven vorhanden ist.

6. Methode zur Verstärkung nach einem der vorigen Ansprüche, wobei die dritte Schicht oder obere Schicht in einem Gewichtsverhältnis zwischen 2 und 2,5 mit Bezug auf das Gesamtgewicht der Mischung aus Harz, Härter, Füllstoffen und Additiven vorhanden ist.

7. Methode zur Verstärkung nach Anspruch 1, wobei der Beutel aus elastischem Material auf Latex basiert ist, Polyamid oder ein anderes Thermopolymer Elastomer mit EPDM ist.

8. Methode zur Verstärkung nach Anspruch 7, wobei der Beutel aus elastischem Material auf Latex basiert ist.

9. Methode zur Verstärkung nach einem der vorigen Ansprüche, wobei das Harz anorganische Füllstoffe ausgewählt aus Talk, Calciumcarbonat, Aluminiumoxid und Marmorsand umfasst.

10. Methode zur Verstärkung nach Anspruch 9, wobei das Harz Calciumcarbonat umfasst.

11. Methode zur Verstärkung nach einem der vorigen Ansprüche, wobei das Harz Füllstoffe in einer Konzentration zwischen 20 und 60 Gewichts% in Bezug auf das Gesamtgewicht der Mischung aus Harz, Härter, Füllstoffen und Additiven umfasst.

12. Methode zur Verstärkung nach Anspruch 1, wobei das Mittel, das mit einer Vakuumvorrichtung verbunden ist, das Mittel, das mit der Atmosphäre verbunden ist, und das Mittel, das mit einem Vorrat umfassend das Harz und den Härter verbunden ist, jeweils eine Öffnung im Beutel ist, die mit einem Schlauch bzw. Rohr verbunden ist, der bzw. das mit einer Vakuumvorrichtung verbunden ist, der bzw. das mit der Atmosphäre verbunden ist, und der bzw. das mit dem umfassend das Harz und den Härter verbunden ist.

13. Methode zur Verstärkung nach Anspruch 1, umfassend ein Mittel zum Abdichten um dem Umfang des zu verstärkenden thermogeformten acrylischen Sanitärausstattungs-Produkts herum und um den Umfang des Beutels aus elastischem Material herum, so dass der Satz von Fiberglas-Schichten, die auf der zu verstärkenden Oberfläche des thermogeformten acrylischen Sanitärausstattungs-Produkts angeordnet sind, von der Atmosphäre isoliert sind.

14. Methode zur Verstärkung nach einem der vorigen Ansprüche, wobei das zu verstärkende acrylische Sanitärausstattungs-Produkt ein thermogeformtes PMMA acrylisches Sanitärausstattungs-Produkt mit konkaven und konvexen Teilen ist, ausgewählt aus einem Bad, einer Duschwanne, einem Duschpaneel, einer Hydromassage-Säule oder einer Dusch- oder Badekabine.

15. Thermogeformtes PMMA acrylisches Sanitärausstattungs-Produkt mit konkaven und konvexen Teilen, welches mit dem Verfahren gemäß einem der vorstehenden Ansprüche verstärkt ist.

## Revendications

1. Procédé de renforcement de produits sanitaires en acrylique comprenant un produit d'équipement sanitaire acrylique PMMA thermoformé avec des parties concaves et convexes, de la fibre de verre, de la résine et un agent durcisseur, lequel procédé comprend les étapes suivantes :
a) couvrir la surface à renforcer du produit d'équipement sanitaire en acrylique thermoformé avec un ensemble de couches de fibre de verre, en adaptant les couches à la forme de la surface à renforcer ;
b) placer dessus un sac de matériau élastique pour qu'à la fois la surface à renforcer et l'ensemble de couches de fibre de verre qui la recouvrent puissent être isolés de l'atmosphère par ledit sac, ledit sac étant équipé de moyens raccordés à un dispositif de vide, des moyens raccordés à l'atmosphère et des moyens raccordés à une réserve comprenant la résine et l'agent durcisseur ;
c) appliquer un vide entre le sac de matériau élastique et la surface du produit d'équipement sanitaire à renforcer de telle sorte que l'ensemble de couches de fibre de verre s'adapte à la forme de la surface du produit d'équipement sanitaire à renforcer ;
d) ouvrir les moyens raccordés à la réserve comprenant la résine et l'agent durcisseur, maintenir le vide jusqu'à ce que, sous l'action du vide, de la gravité et/ou de l'injection, l'infusion de la résine et de l'agent durcisseur ait lieu en répartissant ces derniers uniformément à travers l'ensemble de couches de fibre de verre recouvrant le produit d'équipement sanitaire à renforcer;
e) permettre à l'agent durcisseur d'agir le temps nécessaire puis retirer le sac de matériau élastique afin d'obtenir un produit d'équipement sanitaire thermoformé et renforcé ;
où la résine est une résine polyester ou une résine époxy avec des charges et additifs, outre l'agent durcisseur, et ne contient pas de composés thixotropes, et **caractérisé en ce que** l'ensemble de couches de fibre de verre comprend au moins trois couches en sandwich avec les composition et fonction suivantes :
- la première couche ou couche inférieure en contact avec la surface à renforcer est en fibre de verre tissée à la façon d'un paillasson et a pour fonction de retenir la résine ;
- la seconde couche ou couche intermédiaire est en fibre de verre tissée à la façon paillasson ou en polypropylène, polyéthylène ou tissu PVC et a pour fonction de répartir la résine pour imprégner les couches en contact avec elle ; et
- la troisième couche ou couche externe est en fibre de verre avec un tissu de mèches de type croisées bi axiales ou multiaxiales et a pour fonction d'apporter rigidité et résistance au produit d'équipement sanitaire en acrylique thermoformé.

2. Procédé de renforcement selon la revendication 1 où la première couche ou couche inférieure et la troisième couche ou couche supérieure ont une densité comprise entre 200 et 600 g/m².

3. Procédé de renforcement selon la revendication 1 où la seconde couche ou couche intermédiaire a une densité comprise entre 15 et 90 g/m².

4. Procédé de renforcement selon une quelconque des revendications précédentes, où le poids de chaque couche respecte un ratio compris entre 2 et 3,5 par rapport au poids total de la mixture de résine, agent durcisseur, charges et additifs.

5. Procédé de renforcement selon une quelconque des revendications précédentes, où le poids de la première couche ou couche inférieure en contact avec la surface à renforcer respecte un ratio compris entre 3 et 3,5 par rapport au poids total de la mixture de résine, agent durcisseur, charges et additifs.

6. Procédé de renforcement selon une quelconque des revendications précédentes, où le poids de la troisième couche ou couche supérieure respecte un ratio compris entre 2 et 2,5 par rapport au poids total de la mixture de résine, agent durcisseur, charges et additifs.

7. Procédé de renforcement selon la revendication 1, où le sac de matériau élastique est à base de latex, polyamide ou tout autre élastomère thermopolymère avec de l'EPDM.

8. Procédé de renforcement selon la revendication 7, où le sac de matériau élastique est à base de latex.

9. Procédé de renforcement selon une quelconque des revendications précédentes, où la résine comprend des charges inorganiques choisies à partir de talc, carbonate de calcium, alumine et sable de marbre.

10. Procédé de renforcement selon la revendication 9, où la résine comprend du carbonate de calcium.

11. Procédé de renforcement selon une quelconque des revendications précédentes, où la résine comprend des charges dont la concentration au regard du poids est comprise entre 20 et 60 % du poids total de la mixture de résine, agent durcisseur, charges et additifs.

12. Procédé de renforcement selon la revendication 1, où les moyens raccordés à l'appareil de vide, les moyens raccordés à l'atmosphère et les moyens raccordés à une réserve de résine et d'agent durcisseur sont un orifice dans le sac relié à un tube raccordé à un appareil de vide, raccordé à l'atmosphère et raccordé respectivement à la réserve de résine et d'agent durcisseur.

13. Procédé de renforcement selon la revendication 1, comprenant des moyens de scellement autour du périmètre du produit d'équipement sanitaire en acrylique thermoformé à renforcer et autour du périmètre du sac de matériau élastique de telle sorte que l'ensemble des couches de fibre de verre disposées sur la surface du produit d'équipement sanitaire en acrylique thermoformé à renforcer est isolé de l'atmosphère.

14. Procédé de renforcement selon une quelconque des revendications précédentes, où le produit d'équipement sanitaire en acrylique à renforcer est un produit d'équipement sanitaire en acrylique PMMA thermoformé comportant des parties concaves et convexes sélectionnées parmi une baignoire, un bac de douche, un panneau de douche, une colonne d'hydro massage ou une cabine de douche ou de bain.

15. Produit d'équipement sanitaire en acrylique PMMA thermoformé avec des parties concaves et convexes et renforcé selon une quelconque des revendications précédentes.
